# EUROPEAN PATENT SPECIFICATION

(11) **EP 0 624 923 B1**
(45) Date of publication and mention of the grant of the patent: **07.01.1999**
(21) Application number: 93921116.5
(22) Date of filing: 05.10.1993
(51) Int. Cl.: H01R 13/46, C08L 77/06, C08K 5/09, C08K 5/13

(54) **CONNECTOR**
VERBINDER
CONNECTEUR

(30) Priority: 05.10.1992 JP 266286/92
(43) Date of publication of application: 17.11.1994
(73) Proprietor: MITSUI CHEMICALS, INC., Tokyo (JP); SUMITOMO WIRING SYSTEMS, LTD., Yokkaichi City Mie 510 (JP)
(72) Inventor: IKEJIRI, Fumitoshi Mitsui Petrochemical Ind.,Ltd., Yamaguchi 740 (JP); NISHIMURA, Katunari Mitsui Petrochemical Ind,Ltd., Kuga-gun Yamaguchi 740 (JP); NOZAKI, Takao Sumitomo Wiring Systems, Ltd., Yokkaichi-shi Mie 510 (JP); NABESHIMA, Akira Sumitomo Wiring Systems, Ltd., Yokkaichi-shi Mie 510 (JP); CHISHIMA, Masamitsu Sumitomo Wiring Systems, Ltd., Yokkaichi-shi Mie 510 (JP)
(74) Representative: Cresswell, Thomas Anthony
(86) International application number: JP9301429
(87) International publication number: WO9408363

(56) References cited:
- JP-A- 3 163 165
- JP-A- 4 202 560
- JP-A-54 063 151
- JP-A-59 027 948

## Description

This invention relates to connectors, in particular those whose characteristics, such as toughness, are not deteriorated by heating, which can be prepared with excellent molding workability, and which are especially suitable for use in automobiles.

As plastic materials for automotive connectors, there have been used, for example, aliphatic polyamides (PA 66, PA 6) and polybutylene terephthalate (PBT).

However, aliphatic polyamides tend to absorb water which decreases their modulus of elasticity, so that there has been a problem that when a connector made of an aliphatic polyamide is used in water or under conditions of high humidity, the connector may loose its firm fitting and may even be taken out. On the other hand, connectors made of PBT are heavy due to its high specific gravity. There is also a problem that the heat resistance of PBT is not always sufficient.

The water absorption characteristics of aliphatic polyamides can be improved by combining them with an aromatic polyamide (see JP-A-2-85,208).

However, such a combination of aliphatic and aromatic polyamides may lead to poor moldability. Such poor moldability can be improved by elevating the molding temperature, but this gives rise to a new problem that when a connector of a certain shape is molded, it may sometimes stick in the mold.

In order to solve such a problem of poor mold release associated with the use of an aromatic polyamide, an attempt to improve the mold releasability by the addition of a mold release agent to the aromatic polyamide has been proposed, for example in JP-A-3-163,165. The mold release agent used therein includes metallic salts of higher fatty acids, for example calcium stearate and derivatives of aliphatic carboxylic acids such as aliphatic alcohol esters of montanic acid, which can also be used as form release agents for aliphatic polyamides.

It has been found, however, that when a mold release agent, for example that disclosed in JP-A-3-163,165, is added to a composition comprising an aromatic polyamide, the mold release agent may evolve gas and foam during a molding step, which deteriorates the properties of the connectors obtained. This is because an aromatic polyamide has a higher melting point than an aliphatic polyamide, so that a composition comprising an aromatic polyamide must be molded at a temperature higher than that of a composition comprising an aliphatic polyamide. That is, even if it is intended to prepare connectors from the aromatic polyamide composition containing the compound used as the mold release agent for the aliphatic polyamide as mentioned above, such a compound may decompose at the molding temperature and foam, and therefore cannot effectively function as the mold release agent. This results in poor mold releasing of the connectors. Further, because of such poor moldability, the connectors obtained may sometimes lock the intended improved characteristics such as toughness.

JP-A-4/202,560 discloses a resin composition comprising an aromatic polyamide and an amorphous grafted α-olefin random elastic copolymer.

EP-A-360,611 discloses a polyamide resin composition containing at least one additive which is a metal salt of a higher fatty acid or an acid ester, partially saporified ester or metal salt of an aliphatic carboxylic acid of 26-32 carbon atoms.

The present invention seeks to provide lightweight connectors whose characteristics, such as toughness, are not decomposed by heating and which can be prepared with excellent molding workability.

The present invention provides a connector having a housing which is formed from a polyamide resin composition comprising
(A) 65-90 parts by weight of an aromatic polyamide having an intrinsic viscosity (η), as measured in concentrated sulfuric acid at 30 °C, of 0.5-3.0 dl/g and a melting point exceeding 300 °C,
   said aromatic polyamide (A) being composed of
   recurring units comprising 50-100 mol % of terephthalic acid constituent units, 0-50 % by mol of aromatic dicarboxylic acid constituent units other than the terephthalic acid units and/or 0-50 % by mol of aliphatic dicarboxylic acid constituent units, each of which has 4 to 20 carbon atoms, and
   recurring units comprising aliphatic alkylenediamine constituent units and/or alicyclic alkylenediamine constituent units; and
(B) 10-35 parts by weight of a graft-modified α-olefin random copolymer and/or a graft-modified vinyl aromatic hydrocarbon/conjugated diene copolymer or a hydrogenation product thereof, said graft modification being with an unsaturated carboxylic acid or an anhydride or derivative thereof, the sum total of aromatic polyamide (A) and graft-modified copolymer (B) being 100 parts by weight; and
(C) 0.1-1.0 parts by weight, based on 100 parts by weight of the sum total of aromatic polyamide (A) and graft-modified copolymer (B), of at least one of a polyethylene wax and a metallic salt of an aliphatic carboxylic acid having 26 to 32 carbon atoms.

The polyamide resin composition may further comprise (D) an antioxidant, preferably comprising a hindered phenol antioxidant, preferably having a molecular weight of at least 500, and a sulfur antioxidant, preferably having a molecular weight at least 600.

In the aromatic polyamide (A) it is preferable that the dicarboxylic acid constituent units are composed of 50-80 % by mol of terephthalic acid constituent units, 0-40 % by mol of aromatic dicarboxylic acid component unit other than the terephthalic acid units, and 20-50 % by mol of aliphatic dicarboxylic acid constituent units.

The graft-modified α-olefin random copolymer and/or graft-modified vinyl aromatic hydrocarbon/conjugated diene copolymer or hydrogenated product thereof (B) is preferably a graft-modified ethylene/propylene copolymer.

The metallic salt of an aliphatic carboxylic acid having 26-32 carbon atoms is preferably sodium montanate.

The present invention has been accomplished on the basis of the finding that by incorporating a specific compound as a mold release agent (C) into a specific aromatic polyamide (A) and a graft-modified elastomeric copolymer (B), a very good moldability of the composition can be ensured.

The connector of the present invention has a housing formed from a composition comprising an aromatic polyamide, a graft-modified elastomeric copolymer and a specific compound acting as a mold release agent in specific proportions. That is, the composition used provides a connector with excellent molding workability. The connector is lightweight due to its low specific gravity, and has a very high heat resistance.
Fig. 1 is a perspective view showing an example of housings for a connector of the present invention;
Fig. 2 is a sectional view showing the housings of Fig. 1 which are connected to each other; and
Fig. 3 is a schematic view showing the structure of a device used for measuring a mold release force.

Meanings of reference numbers:
- 1: Female housing
- 2: Male housing
- 3a: Terminal inserting chamber
- 3b: Terminal inserting chamber
- 4: Female terminal
- 5a: Hooking member (lance)
- 6: Male terminal
- 11: Sprue runner
- 12: Molded article (cup-like article)
- 13: Pushing pin
- 14: Pressure sensor
- 15: Mold release force recorder
- 16: Male mold
- 17: Female mold

The connectors of the present invention are now illustrated in more detail.

### Aromatic polyamide (A)

The aromatic polyamide (A) is composed of recurring units derived from specific dicarboxylic acid constituent units (a) and specific aliphatic diamine constituent units or alicyclic diamine constituent units (b).

The specific dicarboxylic acid constitu.ent units (a) comprise terephthalic acid constituent units (a-1) as essential constituent units. The terephthalic acid constituent units (a-1) may be represented by the formula [I-a]: 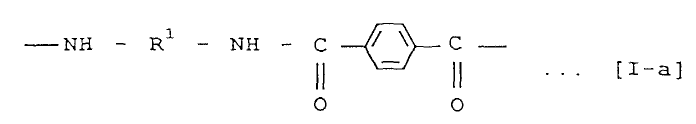 wherein R¹ is a divalent hydrocarbon group, preferably an alkylene group having 4-18 carbon atoms.

Not all of the specific dicarboxylic acid constituent units (a) are necessarily composed of the constituent units represented by formula [I-a]; a part of the terephthalic acid constituent units (a-1) may be replaced by other dicarboxylic acid constituent units.

Such other dicarboxylic acid constituent units include aromatic dicarboxylic acid constituent units (a-2) and aliphatic dicarboxylic acid constituent units (a-3).

Examples of the aromatic dicarboxylic acid constituent units (a-2) include constituent units derived from isophthalic acid, 2-methyl terephthalic acid and naphthalene dicarboxylic acid. Isophthalic acid constituent units are especially preferred.

The isophthalic acid constituent units particularly preferred are represented by formula [I-b]: 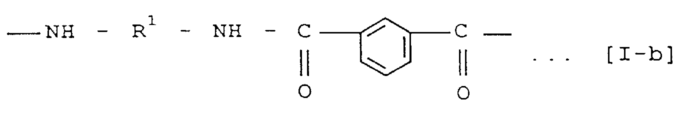 wherein R¹ is a divalent hydrocarbon group, preferably an alkylene group having 4-18 carbon atoms.

The aliphatic dicarboxylic acid constituent units (a-3) are derived usually from aliphatic dicarboxylic acids having 4-20 carbon atoms, preferably 6-12 carbon atoms, in an alkylene group. Examples of the aliphatic dicarboxylic acids used for deriving such aliphatic dicarboxylic acid constituent units (a-3) include succinic acid, adipic acid, azelaic acid and sebacic acid, preferably adipic acid and sebacic acid.

The aliphatic dicarboxylic acid constituent units (a-3) constituting the dicarboxylic acid constituent units (a) may be represented by formula [II]: 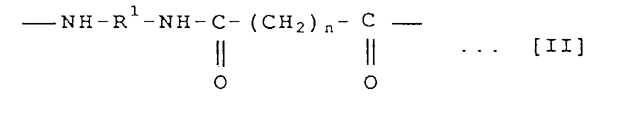 wherein R¹ has the same meaning as above and n is an integer, usually 2-18, preferably 4-10.

The recurring units constituting the polyamide comprise the dicarboxylic acid constituent units (a) and the diamine constituent units (b) as mentioned above.

The diamine constituent units (b) may be derived from aliphatic alkylene diamines and/or alicyclic diamines having 4-18 carbon atoms.

Specific examples of the aliphatic alkylene diamines are 1,4-diaminobutane, 1,6-diaminohexane, trimethyl-1,6-diaminohexane, 1,7-diaminoheptane, 1,8-diaminooctane, 1,9-diaminononane, 1,10-diaminodecane, 1,11-diaminoundecane and 1,12-diaminododecane. A specific example of the alicyclic diamines is diaminocyclohexane.

Preferred diamine constituent units are those derived from straight chain aliphatic alkylene diamines, particularly 1,6-diaminohexane, 1,8-diaminooctane, 1,10-diaminodecane, 1,12-diaminododecane and mixtures thereof. Of these constituent units, especially preferred are those derived from 1,6-diaminohexane.

In the aromatic polyamide (A), the content of the terephthalic acid constituent units (a-1) is 50-100 % by mol, preferably 50-80 % by mol, more preferably 50-70 % by mol; the content of the aromatic dicarboxylic acid constituent units other than terephthalic acid (a-2) is 0-50 % by mol, preferably 0-40 % by mol, more preferably 0-20 % by mol; and the content of the aliphatic dicarboxylic acid constituent units (a-3) is 0-50 % by mol, preferably 10-50 % by mol, more preferably 20-50 % by mol, particularly 30-50 % by mol. The total dicarboxylic acid constituent units is 100 % by mol.

The polyamide may contain small amounts of constituent units derived from polyvalent carboxylic acids having at least tribasicity such as trimellitic acid or pyromellitic acid, in addition to the above-mentioned essential constituent units, i.e. the terephthalic acid constituent units, and optionally the constituent units derived from aromatic dicarboxylic acids other than terephthalic acid, representative of which is isophthalic acid, and optionally the aliphatic dicarboxylic acid constituent units. Such constituent units derived from polyvalent carboxylic acid are usually contained in the aromatic polyamide (A) in an amount of 0-5 % by mol.

The aromatic polyamide (A) may be a mixture comprising an aromatic polyamide composed mainly of the recurring units of formula [I-a] and an aromatic polyamide composed mainly of the recurring units of formula [I-b]. In this case, the content of the aromatic polyamide composed mainly of the recurring units of formula [I-a] is usually not less than 50 % by weight, preferably not less than 55 % by weight.

The aromatic polyamide (A) used in the present invention has an intrinsic viscosity (η), as measured in concentrated sulfuric acid at 30 °C, of 0.5-3.0 dl/g, preferably 0.5-2.8 dl/g and especially 0.6-2.5 dl/g. The content of amino groups in the aromatic polyamide, as measured by neutralization titration in a metacresol solution with p-toluenesulfonic acid, is usually 0.04-0.2 milli equivalent/g, preferably 0.045-0.15 milli equivalent/g and especially 0.5-0.1 milli equivalent/g.

Because of its composition as mentioned above, the aromatic polyamide (A) has a melting point higher than that of an aliphatic polyamide conventionally used hitherto. That is, the aromatic polyamide (A) has a melting point exceeding 300 °C. An aromatic polyamide (A) having a melting point of preferably 305-340 °C more preferably 310-330 °C exhibits excellent heat resistance. Further, the glass transition temperature of an amorphous portion of the aromatic polyamide (A) is usually at least 80 °C.

Because of its specific structure, the aromatic polyamide exhibits a low water absorption value, whereas conventional aliphatic polyamides have been accompanied by a problem of high water absorption values.

Although the aromatic polyamide has a low value of water absorption and favorable heat resistance, it has been found that this aromatic polyamide ten-ds to have a low toughness as compared with aliphatic polyamides, and this may cause another problem that molded articles formed therefrom have insufficient elongation or are brittle. Because a high level of reliability is required in particular for automotive parts, it is important that a further improvement in the toughness of the aromatic polyamide is attained.

### Graft-modified copolymer (B)

The resin composition from which the connectors of the present invention are formed contains a graft-modified elastomeric α-olefin random copolymer and/or a graft-modified vinyl aromatic hydrocarbon/conjugated diene copolymer or a hydrogenation product thereof (B), said graft modification being with an unsaturated carboxylic acid or anhydride or derivative thereof.

The graft-modified α-olefin random elastomeric copolymer used in the present invention is a graft-modified product of a copolymer in which two types of recurring units derived from different α-olefins are arranged at random.

The graft-modified α-olefin random elastomeric copolymer has a low crystallinity or is amorphous. It is preferred that this copolymer is substantially amorphous, that is this copolymer has a crystallinity, as measured by X-ray diffractometry, of not more than 10 %, preferably not more than 5 %, particularly 0 %.
Accordingly, many of the graft-modified α-olefin random elastomeric copolymers do not exhibit any distinct melting point. Further, because of their low crystallinity, the graft-modified α-olefin random elastomeric copolymers are soft and usually have a tensile modulus of at least 0.1 kg/cm² and lower than 20000 kg/cm², preferably from 1 kg/cm² to 15000 kg/cm².

The graft-modified α-olefin random copolymer usually has a melt index (as measured at 190 °C) of 0.1-30 g/10 min, preferably 1.0-20 g/10 min, especially 2.0-15 g/10 min, and usually has a value of Mw/Mn, as measured by GPC, of not more than 5.5, preferably not more than 4.5, especially not more than 3.5.

Further, this graft-modified α-olefin random elastomeric copolymer usually has a glass transition temperature (Tg) of -150 to +50 °C, preferably -80 to -20 °C, usually has an intrinsic viscosity (η), as measured in decalin at 135 °C, of 0.2-10 dl/g, preferably 1-5 dl/g, and usually has a density of 0.82-0.96 g/cm3, preferably 0.84-0.92 g/cm³.

Specific examples of the graft-modified α-olefin random elastomeric copolymers having the above-mentioned characteristics are a graft-modified ethylene/α-olefin copolymer rubber (i) comprising ethylene as a major monomer and a graft-modified propylene/α-olefin copolymer rubber (ii) comprising propylene as a major monomer.

By way of typical examples of the graft-modified α-olefin random elastomeric copolymers as mentioned above, the graft-modified ethylene/α-olefin copolymer rubber (i) and the graft-modified propylene/α-olefin copolymer rubber (ii) are illustrated below in more detail.

For the graft-modified ethylene/α-olefin copolymer rubber (i), α-olefins usually having 3-20 carbon atoms are used. Examples of these α-olefins are propylene, butene-1, pentene-1, hexene-1, 4-methylpentene-1, octene-1, decene-1 and mixtures thereof. Of those, propylene and/or butene-1 are particularly preferred.

For the graft-modified propylene/α-olefin copolymer rubber (ii), α-olefins usually having 4-20 carbon atoms are used. Examples of these α-olefins are butene-1, pentene-1, hexene-1, 4-methylpentene-1, octene-1, decene-1 and mixtures thereof. Of those, butene-1 is particularly preferred.

In the graft-modified ethylene/α-olefin copolymer rubber (i) as mentioned above, the molar ratio (ethylen : α-olefin) of ethylene to α-olefin is generally 10:90 to 99:1, preferably 50:50 to 95:5, though it varies depending on the types of α-olefins used. When the α-olefin used is propylene, the molar ratio is preferably 50:50 to 90:10, especially 70:30 to 85:15. When the α-olefin used is one having at least 4 carbon atoms, the molar ratio is preferably 80:20 to 95:5.

Examples of ethylene/α-olefin copolymers for the graft-modified ethylene/α-olefin copolymer rubbers (i) as mentioned above are binary component copolymers such as an ethylene/propylene copolymer, an ethylene/butene-1 copolymer, an ethylene/4-methylpentene-1 copolymer, an ethylene/hexene-1 copolymer, an ethylene/octene-1 copolymer and an ethylene/decene-1 copolymer; and
multicomponent copolymers such as an ethylene/propylene/1,4-hexadiene copolymer, an ethylene/propylene/dicyclopentadiene copolymer, an ethylene/propylene/5-ethylidene-2-norbornene copolymer, an ethylene/butene-1'/2, 5-norbornadiene copolymer, an ethylene/butene-1/dicyclopentadiene copolymer, an ethylene/butene-1/1,4-hexadiene copolymer and an ethylene/butene-1/5-ethylidene-2-norbornene copolymer.

In the graft-modified propylene/α-olefin copolymer rubber (ii), the molar ratio (propylene:α-olefin) of propylene to α-olefin is preferably 50:50 to 95:5, though it varies depending on the types of α-olefins used. When the α-olefin used is 1-butene, the molar ratio is preferably 50:50 to 90:10, and when the α-olefin used is one having at least 5 carbon atoms, the molar ratio is preferably 80:20 to 95:5.

The α-olefin random elastomeric copolymer may contain, in addition to those units derived from α-olefins, further constituent units such as those derived from diene compounds as in the above-mentioned multicomponent copolymers, so long as the characteristics of the α-olefin random elastomeric copolymer are not deteriorated.

These constituent units which may be contained in the α-olefin random copolymer are, for example, those derived from chain non-conjugated dienes such as 1,4-hexadiene, 1,6-octadiene, 2-methyl-1,5-hexadiene, 6-methyl-1,5-heptadiene and 7-methyl-1,6-octadiene;
constituent units derived from cyclic non-conjugated dienes such as cyclohexadiene, dicyclopentadiene, methyl tetrahydroindene, 5-vinylnorbornene, 5-ethylidene-2-norbornene, 5-methylene-2-norbornene, 5-isopropylidene-2-norbornene and 6-chloromethyl-5-isopropenyl-2-norbornene;
constituent units derived from further diene compounds such as 2,3-diisopropylidene-5-norbornene, 2-ethylidene-3-isopropylidene-5-norbornene and 2-propenyl-2,2-norbornadiene; and
constituent units derived from cycloolefins.

The content of the above-mentioned diene constituent units in the α-olefin random elastomeric copolymer is usually not more than 10 % by mol, preferably not more than 5 % by mol.

The graft-modified α-olefin random elastomeric copolymer are prepared by graft-modifying the unmodified α-olefin random elastomeric copolymers as mentioned above with unsaturated carboxylic acids, anhydrides thereof or derivatives thereof.

Examples of unsaturated carboxylic acids used herein are acrylic acid, methacrylic acid, α-ethylacrylic acid, maleic acid, fumaric acid, itaconic acid, citraconic acid, tetrahydrophthalic acid, methyltetrahydrophthalic acid, endocis-bicyclo[2.2.1]hept-5-en-2,5-dicarboxylic acid (Nadic Acid™) and methyl-endocis-bicyclo[2.2.1]hept-5-en-2,5-dicarboxylic acid (Methylnadic Acid™). Preferred examples of unsaturated carboxylic acid anhydrides are maleic anhydride, citraconic anhydride, Nadic Acid anhydride and Methylnadic Acid anhydride. Usable unsaturated carboxylic acid derivatives are acid halide compounds (e.g. maleyl chloride), imide compounds (e.g. maleimide) and ester compounds (e.g. monomethyl maleate, dimethyl maleate and glicidyl maleate).

These graft modifiers may be used either singly or in combination.

Of the above-mentioned graft modifiers, it is preferred to use the unsatu-rated carboxylic acid anhydrides, especially maleic anhydride or Nadic Acid anhydride.

The graft-modification of the above-mentioned α-olefin random copolymer may be conducted, for example, by a method where the ungrafted copolymer is suspended or dissolved in a solvent, and the graft modifier is added to the suspension or solution to carry out the graft-modifying reaction (solution method), and by a method where the graft-modifying reaction is carried out while melting a mixture of the ungrafted copolymer and the graft modifier (melting method).

The above-mentioned graft-modified α-olefin random copolymer and the graft-modified vinyl aromatic hydrocarbon/conjugated diene copolymer or hydrogenation product thereof (B), the latter two components of which will be illustrated later, may be a graft modification product which may be prepared by mixing a corresponding unmodified, unsaturated polymer and a graft modifier in amounts such that a desired graft ratio is obtained, or by diluting a corresponding graft-modified product having a high graft ratio previously prepared with a corresponding unmodified polymer to obtain a desired graft ratio.

The amount of graft modifier used in the graft reaction may be decided taking the reactivity of the modifier into consideration, and is generally from 1-10 parts by weight based on 100 parts by weight of the unmodified α-olefin random elastomeric copolymer.

By the graft reaction in this manner, there may be obtained a graft-modified α-olefin random elastomeric copolymer in which the graft modifier has been graft polymerized on the unmodified α-olefin random elastomeric copolymer usually in an amount of 0.01-10 parts by weight, preferably 0.05-5 parts by weight, especially 0.1-3 parts by weight, per 100 parts by weight of the unreacted elastomeric copolymer.

In carrying out the graft reaction, the graft efficiency can be improved by the use of a radical initiator. There can be used known radical initiators such as organic peroxides, organic peresters and azo compounds. The amount of the radical initiator is usually 0.01-20 parts by weight, based on 100 parts by weight of the unmodified α-olefin random elastomeric copolymer.

Of the graft-modified α-olefin random elastomeric copolymers illustrated above, the use of a graft-modified ethylene/propylene random copolymer rubber or graft-modified ethylene/α-olefin random copolymer rubber which has an ethylene content of 35-50 % by mol and which is substantially amorphous can provide an effective reduction in loss of toughness of the connector by heat deterioration.

The graft-modified vinyl aromatic hydrocarbon/conjugated diene copolymer (B) is a graft modified product of a random or block copolymer of a vinyl aromatic hydrocarbon and a conjugated diene compound. A hydrogenation product of the graft modified copolymer may also be used.

Specific examples of the vinyl aromatic hydrocarbon/conjugated diene copolymers or hydrogenation products thereof used for preparing the above-mentioned graft-modified product include styrene/butadiene block copolymer rubbers, styrene/butadiene/styrene block copolymer rubbers, styrene/isoprene block copolymer rubbers, styrene/isoprene/styrene block copolymer rubbers, hydrogenated styrene/butadiene/styrene block copolymer rubbers, hydrogenated styrene/isoprene/styrene block copolymer rubbers and styrene/butadiene random copolymer rubbers. In the hydrogenated copolymer rubbers referred to above, the double bonds-remaining in the copolymer rubbers have been partly or fully hydrogenated.

In these copolymers, the molar ratio (vinyl aromatic hydrocarbon : conjugated diene) of the recurring units derived from the vinyl aromatic hydrocarbon to the recurring units derived from the conjugated diene is usually 10:90 to 70:30, preferably 20:80 to 50:50.

The vinyl aromatic hydrocarbon/conjugated diene copolymer or hydrogenation product thereof usually has an intrinsic viscosity (η), as measured in decalin at 135 °C, of 0.01-10 dl/g, preferably 0.08-7 dl/g; usually has a glass transition temperature (Tg) of not more than 0 °C, preferably not more than -10 °C, especially not more than -20 °C; and usually has a crystallinity, as measured by X-ray diffractometry, of 0-10 %, preferably 0-7 %, especially 0-5 %.

The graft-modified vinyl aromatic hydrocarbon/conjugated diene copolymer is prepared in the same manner as in the preparation of the above-mentioned graft-modified α-olefin random elastomeric copolymer by graft-modifying the unmodified vinyl aromatic hydrocarbon/conjugated diene copolymer with unsaturated carboxylic acids, anhydrides thereof or derivatives thereof.

Examples of the unsaturated carboxylic acids, anhydrides thereof and derivatives thereof used herein include those compounds used in preparing the above-mentioned graft-modified α-olefin random elastomeric copolymer. These compounds may also be used either singly or in combination.

Preferred graft modifiers are unsaturated carboxylic acid anhydrides and especially maleic anhydride or Nadic Acid anhydride.

The graft polymerization of such a graft modifier on the above-mentioned unmodified copolymer or hydrogenation product thereof may be carried out by a solution method and a melting method as described in the modification of α-olefin random elastomeric copolymer.

In the graft reaction, the amount of the graft modifier used is decided taking the reactivity of the modifier into consideration. The graft modifier is generally used in an amount of 1-10 parts by weight, preferably 1-5 parts by weight, based on 100 parts by weight of the unmodified vinyl aromatic hydrocarbon/conjugated diene copolymer or hydrogenation product thereof. In the graft reaction, there may also be used radical initiators such as organic peroxides, organic peresters and azo compounds in a similar manner as mentioned above.

By carrying out the graft reaction in the manner as mentioned above, there can be obtained a graft-modified vinyl aromatic hydrocarbon/conjugated diene copolymer or hydrogenation product thereof, in which the graft modifier has usually been graft polymerized in an amount of 0.01-10 parts by weight, preferably 0.05-5 parts by weight, based on 100 parts by weight of the unmodified aromatic vinyl hydrocarbon/conjugated diene copolymer or hydrogenation product thereof.

The graft-modified vinyl aromatic hydrocarbon/conjugated diene copolymer or hydrogenation product thereof thus obtained is a low crystalline or amorphous copolymer. A substantially amorphous copolymer is preferred. That is, of these graft-modified copolymers, those having a crystallinity, as measured by X-ray diffractometry, of not more than 10 %, preferably not more than 7 %, especially not more than 5 % are used, and those having a crystallinity of substantially 0 % are particularly preferred. Accordingly, many of the graft-modified vinyl aromatic hydrocarbon-nonconjugated diene copolymers or hydrogenation products thereof do not exhibit a distinct melting point. Further, because of their low crystallinity, these graft-modified aromatic hydrocarbon/conjugated diene copolymers or hydrogenation products thereof are soft, and usually have a tensile modulus of at least 0.1 kg/cm² and less than 20000 kg/cm², preferably 1 kg/cm² to 15000 kg/cm².

The graft-modified vinyl aromatic hydrocarbon/conjugated diene copolymer or hydrogenation product thereof usually has a melt index (as measured at 190 °C) of 0.1-30 g/10 min, preferably 1.0-20 g/10 min, especially 2.0-15 g/10 min.

The graft-modified vinyl aromatic hydrocarbon/conjugated diene copolymer or hydrogenation product thereof usually has a glass transition temperature (Tg) of -150 to +50 °C, preferably -80 to -20 °C; and usually has an intrinsic viscosity (η), as measured in decalin at 135 °C, of 0.01-10 dl/g, preferably 1-5 dl/g.

By the use of such a graft-modified vinyl aromatic hydrocarbon/conjugated diene copolymer or hydrogenation product thereof, there can be attained an effective reduction in loss of toughness of the connector by heat deterioration. When the connector is intended to be used at high temperatures and for a long period of time, the use of the hydrogenation product is particularly preferred.

Among the above-mentioned graft-modified α-olefin random copolymers and the graft-modified vinyl aromatic hydrocarbon/conjugated diene copolymers or hydrogenation products thereof (B), it is particularly preferable to use a graft-modified ethylene/propylene copolymer, and a graft modified and hydrogenated product of a styrene/butadiene/styrene block copolymer.

The graft-modified α-olefin random copolymer, the graft-modified vinyl aromatic hydrocarbon/conjugated diene copolymer or hydrogenation product thereof (B) may be used either singly or in combination. It is particularly preferable to use a mixture of both components in about equal amounts for excellent balance of various physical properties.

Other polymers or copolymer may be incorporated in the above-mentioned graft-modified α-olefin random copolymer and/or the graft-modified vinyl aromatic hydrocarbon/conjugated diene copolymer or hydrogenation product thereof (B) to an extent such that characteristics of these resins are not deteriorated.

### Mold release agent (C)

The resin composition comprises the aromatic polyamide (A) and the graft-modified copolymer (B) as mentioned above, and further a mold release agent (C) selected from polyethylene waxes and metallic salts of specific aliphatic carboxylic acids.

The polyethylene wax is a polymer of ethylene usually having an average molecular weight (as measured by viscometry) of 500-11000, preferably 1000-3000. The softening temperature of the polyethylene wax is usually 110-145 °C, preferably 125-135 °C. The polyethylene wax is usually a homopolymer of ethylene, but an α-olefin other than ethylene may be copolymerized to an extent such that the characteristics of the resulting copolymer wax are not deteriorated. In this case, the amount of the α-olefin other than ethylene to be copolymerized is usually 0-45 % by weight.

The metallic salt of a carboxylic acid (C) used in the invention is a metallic salt of an aliphatic carboxylic acids having 26-32 carbon atoms. Specific examples are metallic salts of cerotic acid, montanic acid and melissic acid. The metals that form salts with these aliphatic carboxylic acids are those belonging to groups I, II and III of the periodic table. Specific examples of these metallic salts of aliphatic carboxylic acid having 26-32 carbon atoms are calcium montanate, sodium montanate and lithium montanate Sodium salts are preferred and sodium salts of montanic acid, which is commercially available for example from Hoechst Japan under the trade name Hostamont NAV-101, is particularly preferred.

The polyethylene waxes and metallic salts of aliphatic carboxylic acids having 26-32 carbon atoms mentioned above may be used either singly or in combination.

Because calcium stearate or magnesium stearate, which is conventionally used as a mold release agent for an aliphatic polyamide resin, foams a composition comprising the above-mentioned aromatic polyamide (A) and graft-modified copolymer (B) at the time of molding, the resulting connector failes to exhibit favorable physical properties.

The resin composition used for the preparation of the connectors of the invention contains the aromatic polyamide (A) in an amount of 65-90 parts by weight, preferably 70-80 parts by weight and the graft-modified copolymer (B) in an amount of 10-35 parts by weight, preferably 20-30 parts by weight, the sum total of the aromatic polyamide (A) and graft-modified copolymer (B) being 100 parts by weight, and further the mold release agent (C) in an amount, based on 100 parts by weight the sum total of the aromatic polyamide (A) and graft-modified copolymer (B), of 0,1-1.0 parts by weight, preferably 0.1-0.5 parts by weight.

The polyamide resin compositions used for forming the connectors of the present invention usually has a specific gravity of about 1.05-1.12, preferably about 1.07-1.10. This specific gravity is lower than those of resins widely used for making connectors, such as polybutylene terephthalate having a specific gravity of about 1.31 and nylon 66 having a specific gravity of about 1.14. Accordingly, the use of the above-mentioned polyamide resin compositions makes it possible to reduce the weight of the connectors.

### Antioxidant (D)

The resin composition comprising the above-mentioned specific aromatic polyamide (A), graft-modified copolymer (B) and mold release agent (C) used for the preparation of the connectors of the invention may further comprise an antioxidant (D). Examples include known antioxidants such as phenol, sulfur and phosphorous antioxidants. Of these antioxidants, particularly preferred are hindered phenol and sulfur antioxidants.

The hindered phenol antioxidant, usually having a molecular weight of at least 500, preferably at least 540, especially at least 600, exhibits a high effectiveness. It is preferable that the hindered phenol antioxidant has a temperature at which a reduction in its weight by 10 % in a thermogravimetric analysis curve, as measured in air (TGA 10 % weight reduction temperature), of at least 300 °C, more preferably at least 320 °C, especially at least 350 °C. The thermogravimetric analysis curve may be obtained by measurement at a heating rate of 10 °C/min using a thermal analyzer TG-DTA from Rigaku Denki K.K. The hindered phenol antioxidants having the above-mentioned molecular weight and TGA temperature are difficult to decompose under heat during molding.

Examples of the hindered phenol antioxidants having such characteristics are:
n-Octadecyl-3-(4'-hydroxy-3',5'-di-tert-butylphenyl)propionate: (molecular weight 530, TGA 10% weight reduction temperature 305 °C),
1,1,3-Tris(2-methyl-4-hydroxy-5-tert-butylphenyl)butane: (molecular weight 544, TGA 10% weight reduction temperature 323 °C),
1,3,5-Trimethyl-2,4,6-tris(3,5-di-tert-butyl-4-hydroxyphenyl)benzylbenzene: (molecular weight 774, TGA 10% weight reduction temperature 338 °C),
1,3,5-Tris(4-hydroxy-3,5-di-tert-butylbenzyl)-s-triazine-2,4,6-(1H,3H,5H)-trione: (molecular weight 783, TGA 10% weight reduction temperature 347 °C),
Ethylene glycol-bis[3,3-bis(3'-tert-butyl-4'-hydroxyphenyl)butylate]: (molecular weight 794, TGA 10% weight reduction temperature 344 °C),
Tetrakis[methylene-3-(3,5-di-tert-butyl-4-hydroxyphenyl)propionate]methane: (molecular weight 1176, TGA 10% weight reduction temperature 355 °C),
3,9-Bis[2-{3-(3-tert-butyl-4-hydroxy-5-methylphenyl)propionyloxy}-1,1-dimethylethyl]-2,4,8,10-tetraoxaspiro[5,5]undecane: (molecular weight 741, TGA 10% weight reduction temperature 372 °C),
1,6-Hexanediol-bis[3-(3,5-di-tert-butyl-4-hydroxyphenyl)propionate]: (molecular weight 639, TGA 10% weight reduction temperature 314 °C),
Triethylene glycol-bis[3-(3-tert-butyl-5-methyl-4-hydroxyphenyl)propionate]: (molecular weight 587, TGA 10% weight reduction temperature 311 °C),
N,N'-hexamethylene-bis(3,5-di-tert-butyl-4-hydroxycinnamamide): (molecular weight 637, TGA 10% weight reduction temperature 330 °C),
N,N'-bis[3-(3,5-di-tert-butyl-4-hydroxyphenyl)propionyl]hydrazine: (molecular weight 553, TGA 10% weight reduction temperature 304 °C),
2,2'-oxamido-bis-ethyl-3-(3,5-di-tert-butyl-4-hydroxyphenyl)propionate: (molecular weight 697, TGA 10% weight reduction temperature 323 °C),
2,2'-methylene-bis(4-methyl-6-tert-butylphenol)terephthalate: (molecular weight 810, TGA 10% weight reduction temperature 327 °C),
1,3,5-Tris[(3,5-di-tert-butyl-4-hydroxyphenyl) propionyloxyethyl)isocyanurate: (molecular weight 1045, TGA 10% weight reduction temperature 346 °C),
2,2'-thio-diethylenebis[3-(3,5-di-tert-butyl-4-hydroxyphenyl)propionate], and
2,2'-bis[4-{2-(3,5-di-butyl-4-hydroxyhydrocinnamoyloxy)}ethoxyphenyl]propane: (molecular weight 836).

These compounds may be used either singly or in combination.

Of these hindered phenol antioxidants, preferred are those which are polyhydric, more preferably having two or more hydric phenols, and particularly preferred are:
3,9-bis[2-{3-(3-tert-butyl-4-hydroxy-5-methylphenyl)propionyloxy}-1,1-dimethylethyl]-2,4,8,10-tetraoxaspiro[5,5]undecane,
N,N'-hexamethylenebis(3,5-di-tert-butyl-4-hydroxycinnamamide),
1,1,3-tris (2-methyl-4-hydroxy-5-tert-butylphenyl)butane and
n-octadecyl-3-(4'-hydroxy-3',5'-di-tert-butylphenyl)propionate.

It has been found that the sulfur antioxidant usually having a molecular weight of at least 600, preferably at least 620, especially at least 650, exhibits a high effectiveness. The sulfur antioxidant usually has a temperature at which a reduction in its weight by 10 % in a thermogravimetric analysis curve, as measured in air (TGA 10 % weight reduction temperature), of at least 280 °C, preferably at least 290 °C, especially at least 300 °C. The sulfur antioxidants having the above-mentioned molecular weight and TGA temperature are difficult to decompose under heat during molding.

Further, as the sulfur antioxidant, compounds of formula [III] may be preferably used:

(R¹S - R² - COOCH₂)₄C [III]

wherein R¹ is a hydrocarbon radical usually having 3-20 carbon atoms, preferably 5-20 carbon atoms, R² is a divalent hydrocarbon radical usually having 1-5 carbon atoms, preferably 1-3 carbon atoms, and the four sulfur-containing groups attached to the carbon atom may be the same or different.

A specific example of a compound of formula [III] is penta(erythrityl-tetra-β-mercaptolauryl)propionate: (molecular weight 1160, TGA 10% weight reduction temperature 300 °C).

As the sulfur antioxidant, there may also be used compounds of formula [IV], in addition to the compounds of formula [III]:

S (R⁴ - COOR³)₂ [IV]

wherein R³ is an alkyl group usually having 15-30 carbon atoms, preferably 18-30 carbon atoms, which optionally contains a sulfur atom, and R⁴ is a divalent aromatic group which optionally carries an alkyl group, a divalent alicyclic alkyl group which optionally carries an alkyl group, a divalent alkyl group or a single bond.

Specific examples of the compounds of formula [IV] are:
Distearylthio-di-1,1'-methylpropionate: (molecular weight 696, TGA 10 % weight reduction temperature 296 °C),
Myristylstearylthio dipropionate: (molecular weight 626, TGA 10% weight reduction temperature 284 °C),
Distearylthio dipropionate: (molecular weight 682, TGA 10% weight reduction temperature 292 °C), and
Distearylthio dibutyrate: (molecular weight 710, TGA 10% weight reduction temperature 296 °C).

Of the sulfur antioxidants illustrated above, the compounds of formula [III] exhibit particularly excellent heat stability in the above-mentioned specific aromatic polyamide.

In the resin composition used according to the invention, either the hindered phenol antioxidant or sulfur antioxidant, or both are usually incorporated in an amount, based on 100 parts by weight of the resin components, of 0.2-4 parts by weight, preferably 0.5-2 parts by weight. It is particularly preferable to use both the hindered phenol and sulfur antioxidants. The weight ratio of the hindered phenol antioxidant to the sulfur antioxidant is usually 1:5 to 5:1, preferably 1:3 to 3.5:1.

The thermoplastic resin composition may comprise further additives, such as inorganic fillers, organic fillers, heat stabilizers, weathering stabilizers, antistatic agents, anti-slip agents, anti-blocking agents, anti-fogging agents, lubricants, pigments, dyes, natural oils and synthetic oils, so long as they do not deteriorate the characteristics of the composition.

Further, the composition may be mixed with other heat resisting thermoplastic resins to an extent such that they also do not deteriorate the characteristics of the composition. Examples of such heat resisting resins are PPS (polyphenylene sulfide), PPE (polyphenylene ether), PES (polyether sulfone), PEI (polyether imide), LCP (liquid crystal polymer) and modification products of these resins. In the present invention, the use of polyphenylene sulfide is particularly preferred.

The content of the heat resisting thermoplastic resin in the composition is usually less than 50 % by weight, preferably 0-40 % by weight.

### Connector

For the preparation of the connectors of the invention, a resin composition is first prepared by mixing and melting the above-mentioned aromatic polyamide (A), graft modified elastomeric copolymer (B), and mold release agent compound (C), and, optionally, antioxidant (D). There may be used ordinary kneading devices such as an extruding machine and a kneader. The mold release agent (C) may be added to the resin composition after the preparation thereof.

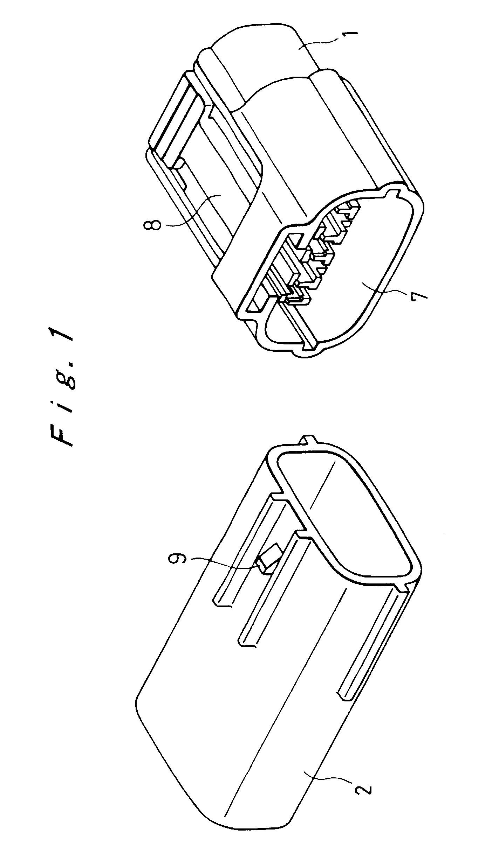

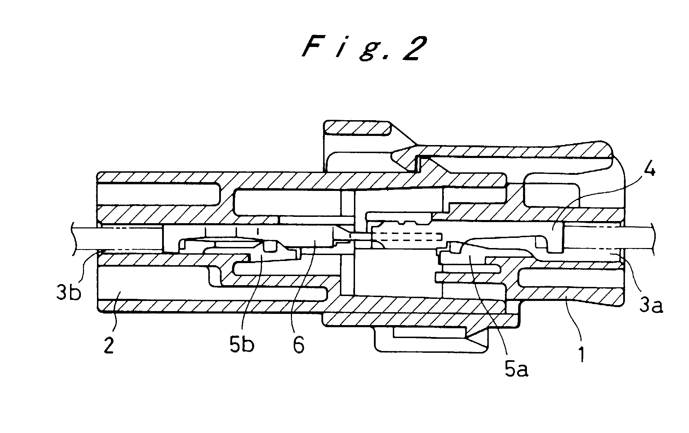

With the resin composition thus obtained, a connector main body, for example the connector housings which are depicted in Figs. 1 and 2, may be prepared by means of conventionally used methods such as an injection molding technique.

As shown in Figs. 1 and 2, the connector of the invention comprises a female connector housing 1 and a male connector housing 2, both being formed from the above-mentioned polyamide resin composition. In the female connector housing 1, there are formed a plurality of terminal inserting chambers 3a, and in each of the terminal inserting chambers 3a, a female terminal 4 is supported by a terminal hooking member (lance) 5a formed integrally with the female connector housing. On the other hand, in the male connector housing 2, there are also formed a plurality of terminal inserting chambers 3b, and in each of the terminal inserting chambers 3b of the male terminal connector housing, a male terminal 6 is supported by a terminal hooking member (lance) 5b formed integrally with the male connector housing 2 so that the male terminal 6 is capable of contacting with the female terminal 4 of the female connector housing 1 when the male connector housing 2 is fitted with the female connector housing 1. In the connector of the invention having such a structure, a first half front portion of the male connector housing 2 is fitted to a fitting portion 7 of a first half front portion of the female connector housing 1, whereby both connector housings are engaged to each other by a holding means comprising an elastic holding member 8 and a holding projection 9, and the female terminals 4 and the male terminals 6 are connected electrically with each other.

The connector of the present invention having such a structure as mentioned above not only can be used as a conventional connector, but also is particularly suitable for use under conditions where heating and cooling are repeated, as in an automotive engine room, because the connector of the invention has excellent heat resistance and a smaller reduction in toughness caused by heating the connector. For example, when an conventional connector is used in an automotive engine room, the toughness thereof is reduced by heating, resulting in a decrease in service durability. In contrast, the connector of the invention hardly suffers such a reduction in toughness, so that it keeps its necessary extensibility even after heat aging.

The connector of the present invention does not have reduced toughness even after exposure to a high temperature for a long period of time.

The resin composition used for forming the housings of the connector of the invention has excellent mold release characteristics, so that the resin composition can provide molded housings at a high productivity rate.

In addition, the resin composition used for the connector housings of the invention has a lower specific gravity than those of resins for conventional connectors, so that it can contribute to saving the weight of the connector.

Further, the resin composition used for the connector housings of the invention exhibits a low water absorption and excellent chemical resistance, and hence the connector formed from the composition has high dimensional stability even when the connector is brought into contact with water.

### EXAMPLES

The present invention is further illustrated is the following Examples.

### Synthesis Example 1

An aromatic Polyamide (A) was prepared in the manner described below.

### Preparation of Aromatic Polyamide (A)

A 1-liter reactor was charged with 255.6 g (2.2 mol) of 1,6-diaminohexane, 201 g (1.2 mol) of terephthalic acid, 144.7 g (0.99 mol) of adipic acid, 0.45 g (4.25 x 10⁻³ mol) of sodium hypophosphite as a catalyst, and 148 ml of deionized water, purged with nitrogen and then the reaction was carried out for 1 hour at 250 °C and 35 kg/cm². The molar ratio of terephthalic acid to adipic acid was 55:45.

After a reaction time of 1 hour, the reaction product was withdrawn from the reactor into a container which was connected to the reactor and kept an internal pressure which was lower by about 10 kg/cm² than that of the reactor, to obtain 545 g of a polyamide precursor having an intrinsic viscosity (η) (as measured at 30 °C in a concentrated sulfuric acid) of 0.15 dl/g.

Subsequently, the polyamide precursor was dried and polymerized by melting in a twin-screw extruder at a cylinder temperature of 330 °C to obtain an aromatic polyamide.

This polyamide, named Aromatic Polyamide A, had the following composition: in the dicarboxylic acid constituent units, the content of the terephthalic acid constituent units was 55 % by mol and that of the adipic acid constituent units was 45 % by mol. The physical properties of the polyamide were:
Intrinsic viscosity (at 30 °C in a concentrated sulfuric acid).. 1.0 dl/g
Melting point ... 313 °C
Glass transition temperature ... 80 °C

### Synthesis Example 2

In the manner as described below, two types of modified copolymers [Modified Copolymer (B-a), and Modified Copolymer (B-b)] were obtained.

### Preparation of Modified Copolymer (B-a)

An ethylene/propylene copolymer rubber having a molar ratio of ethylene to propylene of 81:19 was prepared by a conventional method. This copolymer had an intrinsic viscosity (η), as measured at 135 °C in decalin, of 2.19 dl/g.

Maleic anhydride was graft polymerized on this ethylene/propylene copolymer rubber by a conventional method to obtain a maleic anhydride-graft modified ethylene/propylene copolymer rubber. The amount of maleic anhydride grafted was 0.77 % by weight.

### Preparation of Modified Copolymer (B-b)

Maleic anhydride was graft polymerized on a hydrogenated styrene/butadiene/styrene block copolymer (styrene content: 30 % by weight; Trade name: Craiton G available from Shell Chemical Co.) to obtain a maleic anhydride-graft modified and hydrogenated styrene/butadiene/styrene block copolymer. The amount of maleic anhydride grafted was 1.94% by weight.

### Example 1

80 parts by weight of Aromatic Polyamide (A) obtained in Synthesis Example 1, 20 parts by weight of Modified Copolymer (B-a) obtained in Synthesis Example 2, 0.25 parts by weight of sodium montanate (Trade name: Hostamont NAV 101 available from Hoechst Japan), 0.5 parts by weight of a phenol antioxidant (Trade name: Sumirizer GA-80 available from Sumitomo Chemical Co.) and 0.5 parts by weight of a sulfur antioxidant (Trade name: Synox 412S available from Sypro Kasei K.K.) were mixed, and then pelletized using a twin-screw extruder (PCM45 manufactured and sold by Ikegai Tekko K.K.) at a cylinder temperature set to 320 °C.

The thus obtained pellets of the polyamide resin composition were injection molded to obtain test specimens and connectors having the required sizes and shapes.

Injection molding conditions:

| | |
|---|---|
| Injection molding machine | IS55EPN manufactured by Toshiba Kikai K.K. |
| Cylinder temperature | 320 °C |
| Mold temperature | 50 °C |
| Injection pressure | 900 kg/cm² |

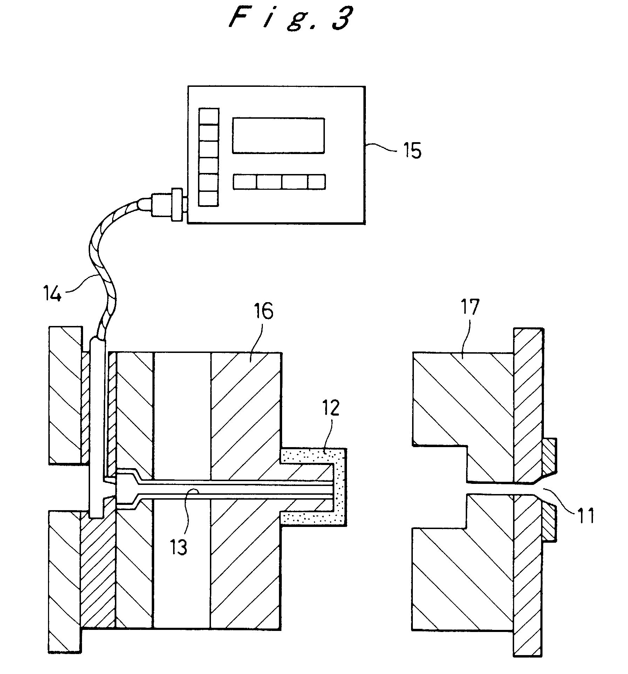

Method for evaluation:
(1) Specific gravity:
   Measured according to ASTM D792.
(2) Water absorption:
   Measured according to ASTM D570. A test specimen of 3.2 x 12.7 x 127 mm was immersed in water at 23 °C for 24 hours and then the water absorption was determined.
(3) Izod impact strength:
   Measured according to ASTM D256 (notched).
(4) Tensile strength and tensile elongation:
   Measured according to ASTM D638 on an ASTM test specimen No. 4 of 2 mm thick at a stress rate of 5 mm/min.
(5) Heat resistance:
   The tensile elongation was measured under the same conditionsf as above, except that an ASTM test specimen which had been allowed to stand in an air oven kept at 150 °C for 500 hours was used. The smaller the drop in tensile elongation, the better the heat resistance.
(6) Mold release characteristics:
   A closed-end cylindrical specimen was molded using a mold equipped with a device for measuring a mold release force as shown in Fig. 3.
   The force required to release the molded specimen from the mold was measured.
   That is, as shown in Fig. 3, a resin composition was filled into a space formed between a male mold 16 and a female mold 17 adapted for forming a cup-like molded article through a spool runner 11 to prepare a cup-like molded article 12. After cooling, the molds 16 and 17 were released, and the cup-like molded article 12 was pushed out by a pushing pin 13 provided at the center of the male mold 16. The pressure applied to the pushing pin 13 for taking the molded article out of the molds was measured by a pressure sensor 14, and the measured value was recorded by a mold release force recorder 15.
   The molds were designed to form a closed cylindrical test specimen of 20 mm diameter, 20 mm depth and 1 mm wall thickness.

### Example 2

Example 1 was repeated except that Modified Copolymer (B-b) was used in place of Modified Copolymer (B-a).

### Example 3

Example 1 was repeated except that a polyethylene wax (Trade name: Highwax 200 P available from Mitsui Petrochemical, Ltd.) was used in place of the sodium montanate as the mold release agent (C).

### Comparative Example 1

Example 1 was repeated except that mold release agent (C) was omitted.

### Comparative Example 2

Example 1 was repeated except that calcium stearate was used in place of sodium montanate.

### Comparative Example 3

Example 1 was repeated except that nylon 66 (Trade name: 2020UW1 available from Ube Industries, Ltd.) was used in place of the aromatic polyamide resin composition.

### Comparative Example 4

Example 1 was repeated except that polybutylene terephthalate (PBT, Trade name: BT1000S-01 available from Dainippon Ink K.K.) was used in place of the aromatic polyamide resin composition.

The compositions and evaluation results of the above Examples and Comparative Examples are shown in Tables 1 and 2.

**Table 1**

| | Ex.1 | Ex.2 | Ex.3 | Comp. Ex.1 | Comp. Ex.2 | Comp. Ex.3 | Comp. Ex.4 |
|---|---|---|---|---|---|---|---|
| Aromatic Polyamide (A) | 80 | 80 | 80 | 80 | 80 | NY66 only | PBT only |
| Modified Copolymer (B-a) | 20 | - | 20 | 20 | 20 | | |
| Modified Copolymer (B-b) | - | 20 | - | - | - | | |
| Mold release agent C (NAV 101) | 0.5 | 0.5 | - | - | - | | |
| Mold release agent C (200P) | - | - | 0.5 | - | - | | |
| Mold release agent C (Ca stearate) | - | - | - | - | 0.5 | | |
| NY 66 | - | - | - | - | - | 100 | - |
| PBT | - | - | - | - | - | - | 100 |
| Specific gravity (-) | 1.10 | 1.10 | 1.10 | 1.10 | 1.10 | 1.14 | 1.31 |
| Water absorption (%) | 0.3 | 0.3 | 0.3 | 0.3 | 0.3 | 1.2 | 0.02 |
| Izod impact strength (kg·cm/cm) | 70 | 70 | 70 | 80 | 10 | 7 | 5 |
| Tensile strength (kg/cm²) | 650 | 650 | 650 | 650 | 550 | 800 | 550 |
| Tensile elongation (%) | 50 | 60 | 50 | 50 | 15 | 80 | 130 |
| Heat resistance (tensile elongation after 50h at 150°C) (%) | 20 | 20 | 20 | 20 | 5 | 25 | 8 |
| Injection moldability (-) | good | good | good | good | foamed | good | good |
| Mold release force (kg/cm²) | 4 | 5 | 5 | >17 cannot be taken out | 5 | 3 | 3 |

**Table 2**

| | Ex.1 | Ex.2 | Ex.3 | Comp. Ex.1 | Comp. Ex.2 | Comp. Ex.3 | Comp. Ex.4 |
|---|---|---|---|---|---|---|---|
| Weight of connector (g) | 8.92 | 8.93 | 8.92 | - | 8.92 | 9.51 (before moisture conditioning) | 10.47 |

| Initial stage | | | | | | | |
|---|---|---|---|---|---|---|---|
| Lock releasability | good | good | good | - | good | good | good |
| Connector fitting force (Kgf) | 14.8 | 14.6 | 14.9 | - | 14.2 | 11.0 | 17.1 |
| Terminal holding force (female housing) (Kgf) | 13.8 | 13.5 | 13.2 | - | 13.6 | 9.1 | 11.8 |

| Heat resistance | | | | | | | |
|---|---|---|---|---|---|---|---|
| (after 200hr at 180°C) | good | good | good | - | good | good | not good |
| Lock releasability Connector fitting force (Kgf) | 14.7 | 14.2 | 14.6 | - | 14.0 | 10.9 | uumeasurable |
| Terminal holding force (female housing) (Kgf) | 13.7 | 13.7 | 13.5 | - | 13.3 | 8.9 | unmeasurable |
| Injection moldability | good | good | good | good | foamed | good | good |
| Mold release properties | good | good | good | unable ***1** | good | good | good |

| | | | | | | | |
|---|---|---|---|---|---|---|---|
| *1: Evalution could not be made because the molded article could not be taken out of the molds. | | | | | | | |

## Claims

1. A connector having a housing which is formed from a polyamide resin composition comprising
(A) 65-90 parts by weight of an aromatic polyamide having an intrinsic viscosity (η), as measured in concentrated sulfuric acid at 30°C, of 0.5-3.0 dl/g and a melting point exceeding 300°C.
said aromatic polyamide (A) being composed of
recurring units comprising 50-100% by mol of terephthalic acid constituent units, 0-50% by mol of aromatic dicarboxylic acid constituent units other than the terephthalic acid constituent units and/or 0-50% by mol of aliphatic dicarboxylic acid constituent units, each of which has 4 to 20 carbon atoms, and
recurring units comprising aliphatic alkylenediamine constituent units and/or alicyclic alkylenediamine constituent units; and
(B) 10-35 parts by weight of a graft-modified α-olefin random copolymer and/or a graft-modified vinyl aromatic hydrocarbon/conjugated diene copolymer or a hydrogenation product thereof, said graft modification being with an unsaturated carboxylic acid or anhydride or derivative thereof, the sum total of aromatic polyamide (A) and graft-modified copolymer (B) being 100 parts by weight; and
(C) 0.1-1.0 parts by weight, based on 100 parts by weight of the sum total of aromatic polyamide (A) and graft-modified copolymer (B), of at least one of a polyethylene wax and a metallic salt of an aliphatic carboxylic acid having 26 to 32 carbon atoms.

2. A connector according to claim 1 having a housing which is formed from a polyamide resin composition which further comprises
(D) an antioxidant comprising a hindered phenol antioxidant and a sulfur antioxidant.

3. A connector according to claim 2 wherein the antioxidant (D) comprises a hindered phenol antioxidant having a molecular weight of at least 500 and a sulfur antioxidant having a molecular weight of at least 600.

4. A connector according to any one of claims 1 to 3 wherein the dicarboxylic acid constituent units of said aromatic polyamide (A) are composed of 50-80% by mol of terephthalic acid constituent units, 0-40% by mol of aromatic dicarboxylic acid constituent units other than terephthalic acid, and 20-50% by mol of aliphatic dicarboxylic acid constituent units.

5. A connector according to any one of claims 1 to 4 wherein the graft-modified α-olefin random copolymer and/or graft-modified vinyl aromatic hydrocarbon/conjugated diene copolymer or hydrogenation product thereof (B) is a graft-modified ethylene/propylene copolymer and/or a hydrogenation product of a graft-modified styrene/butadiene/styrene block copolymer.

6. A connector according to any one of claims 1 to 5 wherein the metallic salt of an aliphatic carboxylic acid having 26 to 32 carbon atoms is sodium montanate.

## Patentansprüche

1. Ein Verbinder mit einem Gehäuse, das aus einer Polyamid-Kunststoffzusammensetzung gebildet wird, die umfasst
(A) 65 bis 90 Gew.-Teile eines aromatischen Polyamids mit einer Eigenviskosität (η), gemessen in konzentrierter Schwefelsäure bei 30°C, von 0,5-3,0 dl/g und einem Schmelzpunkt, der 300°C übersteigt,
das aromatische Polyamid (A) besteht aus wiederkehrenden Einheiten, die 50-100 Mol-% Terephthalsäure-Einheiten, 0-50 Mol-% aromatische Dicarbonsäure-Einheiten, die nicht Terephthalsäure-Einheiten sind, und/oder 0-50 Mol-% aliphatische Dicarbonsäure-Einheiten, die jeweils 4-20 Kohlenstoffatome haben, umfassen, und
wiederkehrende Einheiten, die aliphatische Alkylendiamin-Einheiten und/oder alicyclische Alkylendiamin-Einheiten umfassen; und
(B) 10-35 Gew.-Teile eines durch Pfropfen modifizierten, statistischen α-olefin-Copolymers und/oder eines durch Pfropfen modifizierten Vinyl-aromatischer-Kohlenwasserstoff/konjugiertes-Dien-Copolymers oder eines Hydrierungsproduktes davon, wobei die Pfropf-Modifizierung mit einer ungesättigten Carbonsäure oder einem ungesättigten Anhydrid oder einem Derivat davon ist, die Gesamtsumme von aromatischem Polyamid (A) und durch Pfropfen modifiziertem Copolymer (B) macht 100 Gew.-Teile aus; und
(C) 0,1-1,0 Gew.-Teile, bezogen auf 100 Gew.-Teile der Gesamtsumme aus aromatischem Polyamid (A) und durch Pfropfen modifiziertem Copolymer (B), mindestens eines von einem Polyethylenwachs und einem metallischen Salz einer aliphatischen Carbonsäure mit 26 bis 32 Kohlenstoffatomen.

2. Verbinder nach Anspruch 1 mit einem Gehäuse, das aus einer Polyamid-Kunststoffzusammensetzung gebildet wird, die weiterhin aufweist:
(D) ein Antioxidationsmittel, umfassend ein gehindertes Phenol-Antioxidans und ein Schwefel-Antioxidans.

3. Verbinder nach Anspruch 2, worin das Antioxidans (D) ein gehindertes Phenol-Antioxidans umfasst mit einem Molekulargewicht von mindestens 500 und ein Schwefel-Antioxidans mit einem Molekulargewicht von mindestens 600.

4. Verbinder nach einem der Ansprüche 1 bis 3, worin die Dicarbonsäure-Einheiten des aromatischen Polyamids (A) aus 50-80 Mol-% Terephthalsäure-Einheiten, 0-40 Mol-% aromatische Dicarbonsäure-Einheiten, die nicht Terephthalsäure sind, und 20-50 Mol-% aliphatische Dicarbonsäure-Einheiten bestehen.

5. Verbinder nach einem der Ansprüche 1 bis 4, worin das durch Pfropfen modifizierte statistische α-Olefin-Copolymer und/oder das durch Pfropfen modifizierte Vinyl-aromatischer Kohlenwasserstoff/konjugiertes Dien-Copolymer oder Hydrierprodukt davon (B) ein durch Pfropfen modifiziertes Ethylen/Propylen-Copolymer und/oder ein Hydrierprodukt eines durch Pfropfen modifizierten Styren/Butadien/Styren-Blockcopolymers ist.

6. Verbinder nach einem der Ansprüche 1 bis 5, worin das metallische Salz einer aliphatischen Carbonsäure mit 26 bis 32 Kohlenstoffatomen Natriummontanat ist.

## Revendications

1. Connecteur présentant un boîtier qui est formé à partir d'une composition de résine polyamide comprenant :
(A) de 65 à 90 parties en poids d'un polyamide aromatique présentant une viscosité intrinsèque (η), telle que mesurée dans de l'acide sulfurique concentré à 30 °C, de 0,5 à 3,0 dl/g et un point de fusion dépassant 300 °C ; ledit polyamide aromatique (A) étant composé par :
des motifs récurrents comprenant de 50 à 100 % en moles de motifs constitutifs acide téréphtalique, de 0 à 50 % en moles de motifs constitutifs acide dicarboxylique aromatique différents des motifs constitutifs acide téréphtalique, et/ou de 0 à 50 % en moles de motifs constitutifs acide dicarboxylique aliphatique, chacun de ces motifs comportant de 4 à 20 atomes de carbone, et
des motifs récurrents comprenant des motifs constitutifs alkylènediamine aliphatique et/ou des motifs constitutifs alkylènediamine alicyclique ; et
(B) de 10 à 35 parties en poids d'un copolymère statistique d'α-oléfines, modifié par greffage, et/ou d'un copolymère hydrocarbure vinylique aromatique/diène conjugué, modifié par greffage, ou d'un produit d'hydrogénation de ce dernier, ladite modification par greffage s'effectuant avec un acide carboxylique insaturé ou avec un anhydride ou dérivé de ce dernier,
la quantité totale de polyamide aromatique (A) et de copolymère modifié par greffage (B) valant 100 parties en poids ; et
(C) de 0,1 à 1,0 partie en poids, par rapport aux 100 parties en poids de la quantité totale de polyamide aromatique (A) et de copolymère modifié par greffage (B), d'une cire de polyéthylène et/ou d'un sel métallique d'un acide carboxylique aliphatique comportant de 26 à 32 atomes de carbone.

2. Connecteur selon la revendication 1, présentant un boîtier qui est formé à partir d'une composition de résine polyamide qui comprend en outre :
(D) un antioxydant comprenant un antioxydant de type phénol encombré et un antioxydant soufré.

3. Connecteur selon la revendication 2, dans lequel l'antioxydant (D) comprend un antioxydant de type phénol encombré présentant une masse moléculaire d'au moins 500, et un antioxydant soufré présentant une masse moléculaire d'au moins 600.

4. Connecteur selon l'une quelconque des revendications 1 à 3, dans lequel les motifs constitutifs acide dicarboxylique dudit polyamide aromatique (A) sont composés de 50 à 80 % en moles de motifs constitutifs acide téréphtalique, de 0 à 40 % en mole de motifs constitutifs acide dicarboxylique aromatique différents de l'acide téréphtalique, et de 20 à 50 % en moles de motifs constitutifs acide dicarboxylique aliphatique.

5. Connecteur selon l'une quelconque des revendications 1 à 4, dans lequel le copolymère statistique d'α-oléfines, modifié par greffage, et/ou le copolymère hydrocarbure vinylique aromatique/diène conjugué, modifié par greffage, ou un produit d'hydrogénation de ce dernier (B) est un copolymère éthylène/propylène modifié par greffage et/ou un produit d'hydrogénation d'un copolymère à blocs styrène/butadiène/styrène modifié par greffage.

6. Connecteur selon l'une quelconque des revendications 1 à 5, dans lequel le sel métallique d'un acide carboxylique aliphatique comportant de 26 à 32 atomes de carbone est le montanate de sodium.
